# EUROPÄISCHE PATENTSCHRIFT

(11) **EP 1 470 955 B1**
(45) Veröffentlichungstag und Bekanntmachung des Hinweises auf die Patenterteilung: **02.07.2008**
(21) Anmeldenummer: 04009324.7
(22) Anmeldetag: 20.04.2004
(51) Int. Cl.: B60P 3/06, B60P 3/40

(54) **Vorrichtung zum Transport von Baumaschinen, vorzugsweise Baggern**
Device for transporting a construction machine, especially an excavator
Dispositif pour transporter un engin de construction, en particulier d'excavateur

(30) Priorität: 22.04.2003 DE 20306290 U
(43) Veröffentlichungstag der Anmeldung: 27.10.2004
(73) Patentinhaber: Liebherr-Hydraulikbagger GmbH, 88457 Kirchdorf/Iller (DE)
(72) Erfinder: Seifried, Werner, 89075 Ulm/Donau (DE); Westner, Harald, 87700 Memmingen (DE)
(74) Vertreter: Laufhütte, Dieter

(56) Entgegenhaltungen:
- EP-A- 0 032 474
- EP-A- 0 990 557
- GB-A- 2 319 233
- US-A- 3 631 999
- US-A1- 2001 020 656
- US-B1- 6 450 743

## Beschreibung

Die Erfindung betrifft eine Vorrichtung zum Transport von Baumaschinen, vorzugsweise Baggern.

Um eine Baumaschine, beispielsweise einen Bagger, von einer Baustelle 1 zu einer Baustelle 2 zu transportieren, gibt es grundsätzlich zwei Möglichkeiten. Bei kleineren Entfernungen fährt ein Mobilbagger, soweit er eine Straßenzulassung hat, auf der Straße selbst. Bei größeren Entfernungen bzw. bei fehlender Straßenzulassung der Baumaschine wie beispielsweise bei Raupenbaggern, erfolgt der Transport mit einem Tieflader. Derartige Tieflader wie z.B. in Dokument US 2001/0020656 offenbart, werden auch anderweitig vielfältig eingesetzt. Der Tieflader besitzt eine Plattform, die die Last des Gerätes trägt. Nachtellig ist es, dass zum Transport der Baumaschinen ein zusätzlicher Tieflader angeschafft werden muss. Weiterhin ergeben sich häufig auch Probleme mit der Gesamthöhe, da zur Höhe der Baumaschine auch noch die Höhe des Tiefladers hinzuzuzählen ist. Gerade beim Transport von Baggern ergibt sich hier aber häufig eine Überschreitung der zulässigen Bauhöhe. Zusätzlich ergeben sich bei Verwendung bekannter Tieflader Gewichtsprobleme, da häufig das zulässige Gesamtgewicht überschritten wird.

Aufgabe der Erfindung ist es, eine Vorrichtung zum Transport von Baumaschinen, vorzugsweise Baggern bereitzustellen, mit der Bagger in einer Art und Weise transportiert werden können, in der die Gesamthöhe und das Gesamtgewicht besser nutzbar sind. Darüber hinaus sollte die Lösung möglichst kostengünstig und einfach sein, wobei das Gesamtsystem im Wechselverkehr nutzbar sein sollte.

Erfindungsgemäß wird diese Aufgabe durch die Kombination der Merkmale des Anspruchs 1 gelöst. Demnach wird eine Vorrichtung zum Transport von Baumaschinen, vorzugsweise Baggern, mit einer vorderen Baugruppe, die zum Ankuppeln an ein Zugfahrzeug dient und einer hinteren Baugruppe geschaffen, bei der die Baumaschine selbst mit der vorderen Baugruppe und der hinteren Baugruppe zu einer Transporteinheit zusammenkoppelbar ist. Hier wird also auf die übliche Ladeplattform eines Tiefladers ausdrücklich verzichtet. Der Rahmen der Baumaschine selber ersetzt die Ladeplattform. Durch entsprechend an der vorderen bzw. hinteren Baugruppe angeordnete Kupplungseinrichtungen kann die Gesamtvorrichtung zu einer Transporteinheit zusammenfügbar sein. Anstelle der Baumaschine kann ein eine Lochplattform bildendes Zwischenstück einkuppelbar sein.

Vorteilhafte Ausgestaltungen der Erfindung ergeben sich aus den sich an den Hauptanspruch anschließenden Unteransprüchen.

Demnach können die vordere Baugruppe und/oder die hintere Baugruppe ein- oder mehrachsige LKW-Fahrwerke umfassen. Die Auswahl der Achszahl wird entsprechend dem zu transportierenden Gesamtgewicht der ankuppelbaren Baumaschine ausgewählt.

Gemäß einer besonders vorteilhaften Ausgestaltung der Erfindung kann die Baugruppe als Sattelauflieger ausgebildet sein, wobei in dieser Ausführungsvariante die vordere Baugruppe eine übliche Sattelkröpfung eines Sattelaufliegers umfasst.

Eine weitere besonders vorteilhafte Ausgestaltung der Erfindung ergibt sich dadurch, dass die vordere und die hintere Baugruppe selbstragend ausgebildet sind und heb- und senkbar sind, wobei durch Anheben der Baugruppen ein Einkuppeln und/oder Verriegeln mit der Baumaschine ermöglicht ist.

Schließlich kann die vordere und die hintere Baugruppe eine Luftfederung zum Heben und Senken umfassen. Statt einer Luftfederung kann auch eine hydraulische Feder vorhanden sein.

Ein modulares System einer Transportvorrichtung ergibt sich gemäß der Unteransprüche 5 bis 8. Das Zwischenstück kann beispielsweise ein Hochbett für einen Plattformtieflader oder aber auch ein Tiefbett für einen derartigen Plattformtieflader sein. Hierdurch ergibt sich ein modulares System, das eine variable Einsatzmöglichkeit der Transportvorrichtung sicherstellt. So kann die vordere und hintere Baugruppe einer Transportvorrichtung unmittelbar mit der Baumaschine gekuppelt werden, um diese zu transportieren. Wahlweise können die vordere Baugruppe und die hintere Baugruppe aber auch mit einem üblichen Hochbett bzw. Tiefbett eines Plattformtiefladers kombiniert werden, um so andere Transportaufgaben zu übernehmen. Dabei können je nach Transportaufgabe ein- oder mehrachsige vordere bzw. hintere Baugruppen ausgewählt werden.

Weitere Einzelheiten und Vorteile der Erfindung werden anhand eines in der Zeichnung dargestellten Ausführungsbeispiels näher erläutert. Es zeigen:
- Fig. 1:: eine schematische Seitenansicht einer erfindungsgemäßen Transportvorrichtung mit eingekuppeltem Bagger,
- Fig. 2:: eine schematische Darstellung eines modularen Transportvorrichtungssystems, dargestellt in Einzelteilen und
- Fig. 3 a) - f):: unterschiedliche Zusammenstellungen der in Fig. 2 dargestellten Transportvorrichtungsmodule.

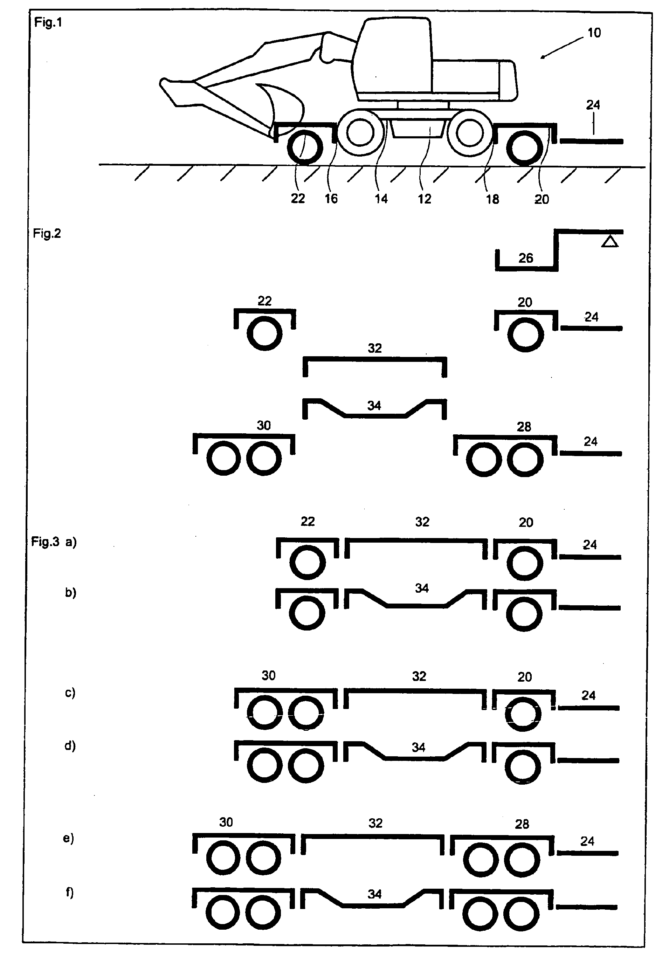

In Fig. 1 ist eine erfindungsgemäße Transportvorrichtung 10 im zusammengebauten Zustand dargestellt. Diese besteht aus einem Mobilbagger 12 in Standardbauweise, der lediglich im vorderen und hinteren Teil seines Fahrwerks 14 um hier im Detail nicht näher dargestellte Verriegelungseinheiten 16 und 18 ergänzt wurde. Insbesondere zum Transport über größere Entfernungen wird der Bagger 12 mit einer vorderen Baugruppe 20 und einer hinteren Baugruppe 22 zu einer Transportvorrichtung zusammengekoppelt, wobei die Verriegelung über die Verriegelungseinheiten 16 und 18 erfolgt. Im hier dargestellten Ausführungsbeispiel ist die vordere Baugruppe 20 als einachsiges LKW-Fahrwerk aufgebaut, welches über eine Zugdeichsel 24 in üblicher Weise mit einer LKW-Zugmaschine (hier nicht dargestellt) verbindbar ist. Das LKW-Fahrwerk der vorderen Baugruppe 20 ist in hier nicht näher dargestellter, aber im Stand der Technik weitgehend bekannter Art und Weise lenkbar ausgebildet. Die hintere Baugruppe 22 ist hier ebenfalls als ein einachsiges LKW-Fahrwerk ausgebildet.

Anstelle der einachsigen LKW-Fahrwerke 20 und 22 können, wie in Fig. 2 dargestellt, auch mehrachsige LKW-Fahrwerke, beispielsweise zweiachsige LKW-Fahrwerke 28 und 30 eingesetzt werden. Auch ein Sattelmodul 26 kann wahlweise integriert werden (vgl. Fig. 2).

Die vordere Baugruppe 20 und die hintere Baugruppe 22 sind selbstragend ausgebildet und vorzugsweise heb- und senkbar, wobei durch Anheben der Baugruppe ein Einkuppeln und/oder Verriegeln mit der Baumaschine ermöglicht wird. Dieses Heben und Senken kann beispielsweise in hier nicht näher dargestellter Art und Weise durch eine Luftfederung bzw. eine hydraulische Federung erfolgen.

Ein besonders vorteilhaftes modulares Transportsystem ergibt sich dadurch, dass anstelle der Baumaschine, im vorliegenden Fall des Baggers 12, unterschiedliche Einsätze wahlweise mit der vorderen Baugruppe 20, bzw. 26 oder 28 und der hinteren Baugruppe 22 bzw. 30 kombinierbar sind. So kann anstelle der Baumaschine ein eine Ladeplattform bildendes Zwischenstück in Form eines Hochbettes 32 oder eines Tiefbettes 34 einkuppelbar sein. Diese Kombinationsmöglichkeiten ergeben die in Fig. 3 schematisch dargestellte Bauform, wobei Fig. 3a) die Kombination einer einachsigen vorderen Baugruppe 20 mit einem Hochbett 32 und einer einachsigen hinteren Baugruppe 22 zeigt,
die Fig. 3b) eine einachsige vordere Baugruppe 20, ein Tiefbett 34 in Kombination mit einer einachsigen hinteren Baugruppe 22,
die Fig. 3c) eine einachsige vordere Baugruppe 20, ein Hochbett 32 in Kombination mit einer zweiachsigen hinteren Baugruppe 30,
die Fig. 3d) eine einachsige vordere Baugruppe 20, ein Tiefbett 34 in Kombination mit einer zweiachsigen hinteren Baugruppe 30,
die Fig. 3e) eine zweiachsige vordere Baugruppe 28 in Verbindung mit einem Hochbett 32 und einer zweiachsigen hinteren Baugruppe 30.

Schließlich zeigt die Fig. 3f) die Kombination einer zweiachsigen vorderen Baugruppe 28 in Verbindung mit einem Tiefbett 34 und einer zweiachsigen hinteren Baugruppe 30.

Hierdurch sind beispielhaft einige Kombinationsmöglichkeiten des modular aufgebauten Systems gezeigt.

Anstelle des hier mit der vorderen Baugruppe und der hinteren Baugruppe zusammengekoppelten Mobilbaggers, können natürlich auch Raupenbagger, Radlader, Planierraupen, Laderaupen, Straßenwalzen, oder andere Baumaschinen nach entsprechender Ausrüstung mit den Verriegelungseinheiten für den Wechselverkehr eingesetzt werden.

Das Ankoppeln einer Baumaschine, beispielsweise des Baggers gemäß Fig. 1 mit den übrigen Teilen der Transportvorrichtung kann beispielsweise wie folgt erfolgen.

Der Bagger fährt an die hintere Baugruppe 22. Über Luftfederung oder hydraulische Federung wird die hintere Baugruppe 22 hochgefahren und verriegelt.

Anschließend wird das vordere Modul angefahren, das Modul wird angehoben und verriegelt. Schließlich werden beide Baugruppen in Fahrstellung gebracht, so dass der Bagger 12 in die in Fig. 1 dargestellt Transportstellung gelangt, in der seine Räder vom Untergrund abgehoben sind.

Gemäß einer möglichen Ausgestaltung der Erfindung sind die Baugruppen zwar stark verbunden, aber die Baugruppen 20, 26, 28 bzw. 22 und 30 können wahlweise mit einer Lenkung versehen sein, wobei es sich hier um eine hydraulische, mechanische oder adhäsionsgelenkte Lenkvorrichtung handeln kann.

## Patentansprüche

1. Vorrichtung (10) zum Transport von Baumaschinen, vorzugsweise Baggern, mit einer vorderen Baugruppe (20), die zum Ankuppeln an ein Zugfahrzeug dient, und einer hinteren Baugruppe (22), wobei die Baumaschine (12) selbst mit der vorderen Baugruppe (20) und der hinteren Baugruppe (22) zu einer Transporteinheit zusammenkuppelbar ist,
**dadurch gekennzeichnet,**
**daß** die vordere und die hintere Baugruppe (20, 22) selbsttragend ausgebildet sind und heb- und senkbar sind, wobei durch Anheben der Baugruppen (20, 22) ein Einkuppeln und Verriegeln mit der Baumaschine (12) ermöglicht ist, wobei an Stelle der Baumaschine (12) ein eine Ladeplattform (32, 34) bildendes Zwischenstück einkuppelbar ist.

2. Vorrichtung nach Anspruch 1, **dadurch gekennzeichnet, daß** die vordere Baugruppe (20) und die hintere Baugruppe (22) ein- oder mehrachsige LKW-Fahrwerke umfassen.

3. Vorrichtung nach Anspruch 1 oder 2, **dadurch gekennzeichnet, daß** die vordere Baugruppe (20) eine Sattelkröpfung eines Sattelaufliegers umfaßt.

4. Vorrichtung nach einem der vorausgehenden Ansprüche, **dadurch gekennzeichnet, daß** die vordere und die hintere Baugruppe (20, 22) eine Luftfederung oder eine andere Federungsart, die beispielsweise eine hydraulische Federung, zum Heben und Senken umfassen.

5. Vorrichtung nach einem der vorangehenden Ansprüche, **dadurch gekennzeichnet, daß** das Zwischenstück ein Hochbett (32) für einen Plattformtieflader ist.

6. Vorrichtung nach einem der vorangehenden Ansprüche, **dadurch gekennzeichnet, daß** das Zwischenstück ein Tiefbett (34) für einen Plattformtieflader ist.

7. Vorrichtung nach einem der vorangehenden Ansprüche, **dadurch gekennzeichnet, daß** das Zwischenstück ein Geräteträger für Anbaugeräte ist.

8. Vorrichtung nach einem der vorangehenden Ansprüche, **dadurch gekennzeichnet, daß** das Zwischenstück eine Kabeltrommelvorrichtung ist.

## Claims

1. Device (10) for transporting construction machines, preferably excavators, comprising a front subassembly (20), which serves for coupling to a tractor vehicle, and a rear subassembly (22), wherein the construction machine (12) itself can be coupled together with the front subassembly (20) and the rear subassembly (22) to form a transport unit, **characterized in that** the front and the rear subassemblies (20, 22) are designed to be self-supporting and are capable of being lifted and lowered so that raising the subassemblies (20, 22) allows them to be coupled into position and locked with the construction machine (12), it being possible for an intermediate section forming a loading platform (32, 34) to be coupled into position in place of the construction machine (12).

2. Device according to Claim 1, **characterized in that** the front subassembly (20) and the rear subassembly (22) comprise single-axle or multi-axle truck dollies.

3. Device according to Claim 1 or 2, **characterized in that** the front subassembly (20) comprises a gooseneck of a semitrailer.

4. Device according to one of the preceding claims, **characterized in that** the front and the rear subassemblies (20, 22) comprise an air suspension or another type of suspension, for example a hydraulic suspension, for lifting and lowering purposes.

5. Device according to one of the preceding claims, **characterized in that** the intermediate section is a high bed (32) for a platform low loader.

6. Device according to one of the preceding claims, **characterized in that** the intermediate section is a low bed (34) for a platform low loader.

7. Device according to one of the preceding claims, **characterized in that** the intermediate section is an equipment carrier for built-on equipment.

8. Device according to one of the preceding claims, **characterized in that** the intermediate section is a cable drum device.

## Revendications

1. Dispositif (10) pour le transport d'engins de chantier, de préférence des excavateurs, comportant un module avant (20), qui est destiné à être attelé à un véhicule tracteur, et un module arrière (22), sachant que l'engin de chantier lui-même peut être couplé au module avant (20) et au module arrière (22) pour former une unité de transport,
**caractérisé en ce que** le module avant (20) et le module arrière (22) sont réalisés sous forme autonome et peuvent être relevés ou abaissés, le levage des modules (20, 22) permettant un couplage et/ou verrouillage avec l'engin de chantier (12), un module intermédiaire, formant une plate-forme de chargement (32, 34), pouvant être couplé en lieu et place de l'engin de chantier (12).

2. Dispositif selon la revendication 1, **caractérisé en ce que** le module avant (20) et le module arrière (22) comportent des mécanismes de roulement avec un ou plusieurs essieux pour poids lourds.

3. Dispositif selon la revendication 1 ou 2, **caractérisé en ce que** le module avant (20) comporte une sellette d'une semi-remorque.

4. Dispositif selon l'une quelconque des revendications précédentes, **caractérisé en ce que** le module avant (20) et le module arrière (22) comportent un vérin pneumatique ou un autre type de vérin, tel qu'un vérin hydraulique, pour le levage et l'abaissement.

5. Dispositif selon l'une quelconque des revendications précédentes, **caractérisé en ce que** le module intermédiaire est un châssis surélevé (32) pour une semi-remorque à plate-forme.

6. Dispositif selon l'une quelconque des revendications précédentes, **caractérisé en ce que** le module intermédiaire est un châssis surbaissé (34) pour une semi-remorque à plate-forme.

7. Dispositif selon l'une quelconque des revendications précédentes, **caractérisé en ce que** le module intermédiaire est un support de machine pour des machines tractées.

8. Dispositif selon l'une quelconque des revendications précédentes, **caractérisé en ce que** le module intermédiaire est un dispositif avec un enrouleur de câble.
